# EUROPEAN PATENT APPLICATION

(11) **EP 4 800 423 A1**
(43) Date of publication of application: **02.09.2026**
(21) Application number: 25160908.7
(22) Date of filing: 28.02.2025
(51) Int. Cl.: G01S 7/00, G01S 7/02, G01S 13/00, H04B 7/0413

(54) **METHODS OF ISOLATING A COMPONENT OF A RECEIVED SENSING SIGNAL IN AN INTEGRATED SENSING AND COMMUNICATION SYSTEM, A BASE STATION, AND A COMPUTER PROGRAM**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of a base station isolating a component of a received sensing signal in an Integrated Sensing and Communication, ISAC, system is provided. The method comprises determining a first predefined sensing signal (S1). The method further comprises transmitting, by the base station, a transmitted sensing signal. The transmitted sensing signal comprises the first predefined sensing signal (S1). The method further comprises receiving, by the base station, a received sensing signal. The received sensing signal comprises a first component and a second component. The first component is a reflection of the transmitted sensing signal. The second component is an interfering signal from a different base station. The second component comprises a sensing signal transmitted by the different base station. The sensing signal transmitted by the different base station comprises a second predefined sensing signal (S2). The method further comprises isolating the first component of the received sensing signal, based on the received sensing signal and the first predefined sensing signal (S1).

## Description

### Field of the invention

The present invention relates to methods of processing received sensing signals in an Integrated Sensing and Communication (ISAC) system. In particular, the invention relates to isolation of a component of the received sensing signal that corresponds to the sensing signal transmitted by the base station, by removing a component of the received sensing signal transmitted by a different base station.

### Glossary

ISAC - Integrated Sensing and Communication
MIMO - Multiple-Input Multiple-Output
AI - Artificial Intelligence
SIC - Successive Interference Cancellation
DM-MIMO - Distributed Massive MIMO
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access TDMA - Time Division Multiple Access
OFDMA - Orthogonal Frequency Division Multiple Access SC-FDMA - Single Carrier Frequency Division Multiple Access MC-FDMA - Multicarrier Frequency Division Multiple Access UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Advanced telecommunications networks may integrate both sensing and communications technologies. Such networks may transmit and receive both signals for sensing and signals for communication from the same base station. For sensing, the network may utilise radar-like signals for the purpose of detecting and tracking nearby objects, for example. For communications, the network may utilise a known communications system, such as a cellular communications system.

Transmission and receipt of signals in networks is typically multiplexed. For example, there may be a series of timeslots available for communication of signals. Each timeslot may then be used to communicate a different signal. For example, a first timeslot may be used to communicate a sensing signal. A second timeslot may be used to transmit a communications signal. A third timeslot may be used to transmit a different communications signal. A fourth timeslot may be used to receive a communications signal, and so on. Additionally or alternatively, multiplexing may be performed in the frequency domain. A general time and/or frequency slot may be referred to as a radio resource allocation.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; AI model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

In existing methods for ISAC systems, base stations that are in close proximity to each other, such that their respective cells are neighbouring or overlapping, use different frequencies to each other for both sensing and communications. This is because signals transmitted by different base stations on the same frequency would interference with each other and could result in poor signal quality. This places a restriction on the available radio resources for both base stations.

Received sensing signals require analysis to determine information about objects of interest off which the sensing signals have reflected. This signal analysis must be performed using frequency-dependent components and techniques. Therefore, it is preferred to perform sensing on a pre-determined frequency, so that the components and techniques may be optimised for operation on that pre-determined frequency. However, it is not currently possible for neighbouring base stions to both use the same pre-determined frequency, due to signal interference issues discussed above. Therefore, one or other of the base stations must use a different frequency for sensing, which can result in sub-optimal performance, increased complexity of components and analysis techniques, and/or additional resources optimising signal analysis components/techniques for multiple frequencies.

### Summary

There is, therefore, a need for neighbouring ISAC stations to be permitted to communicate sensing signals on the same frequency as each other, without the resultant interference impairing the ability of either base station to analyse the received sensing signals. Such a method would have the benefit of improving radio spectrum usage efficiency and improving signal analysis by standardising the sensing frequency.

A method of a base station isolating a component of a received sensing signal in an Integrated Sensing and Communication, ISAC, system is provided. The method comprises determining a first predefined sensing signal (S1). The method further comprises transmitting, by the base station, a transmitted sensing signal. The transmitted sensing signal comprises the first predefined sensing signal (S1). The method further comprises receiving, by the base station, a received sensing signal. The received sensing signal comprises a first component and a second component. The first component is a reflection of the transmitted sensing signal. The second component is an interfering signal from a different base station. The second component comprises a sensing signal transmitted by the different base station. The sensing signal transmitted by the different base station comprises a second predefined sensing signal (S2). The method further comprises isolating the first component of the received sensing signal, based on the received sensing signal and the first predefined sensing signal (S1).

The sensing signal transmitted by the different base station may be received at the base station via a direct channel between the base station and the different base station and/or via a reflection of the second sensing signal (e.g., off an object of interest).

In some examples, the BS stores the received signal in a plurality of taps, each tap at slightly different time (delta1, delta2, etc.). For each tap, successive interference cancellation (SIC) may be applied to extract the first component of the sensing signal from the second component (interference signal).

There are several ways of applying SIC. In a first approach, the strongest received signal (in one tap) is decoded and then removed from the received signal to obtain the remaining signal.

If the strongest received signal is the transmitted sensing signal from the first base station (the first component of the received signal), it will be decoded then the remaining signal is the interference (the second component of the received signal). The interference may then be removed from the whole received signal, then the isolated signal (the first component) will be saved (corresponding to delta1). The same thing may be applied for each tap.

If the strongest received signal is the interference caused by the sensing signal from the other BS, it will be decoded then removed from the received signal in order to obtain the sensing signal (the first component), then the isolated signal (the first component) will be saved (corresponding to delta1). The same thing will be applied for each tap.

Then, cross-correlation with the first predetermined signal may be applied for each tap (after removing the interference). The highest value for cross-correlation will determine the exact receiving time of the reflection of the transmitted signal (based on the corresponding delta).

The BS may identify the reflected signal by applying successive interference cancellation (SIC) to remove the interference caused by the sensing signal from the other BS.

Some radar techniques use cross corelation for detecting signal components. However, these techniques are mainly used where the interference occurs via a single path. In contrast, SIC can be used to cancel multi-path reflections and self-interference from the same radar system (several echoes from the same radar station).

In the proposed methods, SIC may be used to isolate the received sensing signal from BS1 from the sensing signal from another ISAC BS, BS2 (interference signal).

In this context, "isolating" may refer to removing an interference component from a signal (not necessarily removing all interference from the signal).

The second component may further comprise a channel impulse response associated with the sensing signal transmitted by the different base station (h2). The method may further comprise determining the second predefined sensing signal (S2). The method may further comprise isolating the second component of the received sensing signal by removing the first component from the received sensing signal. The method may further comprise removing the channel impulse response from the second component.

Isolating the first component of the received sensing signal may be further based on the second predefined sensing signal (S2).

The interfering signal from the second base station (the second predefined sensing signal) may be the same each time. In other examples, the second base station may occasionally change the sensing signal. The second base station may inform the first base station that the second predefined sensing signal has changed (e.g., via a Xn interface).

Removing the channel impulse response from the second component may comprise calculating the channel impulse response associated with the sensing signal transmitted by the different base station, based on the second component of the received sensing signal and the second predefined sensing signal.

In some examples, the channel impulse response (*h*2) may be determined and/or removed from the second component via manipulation of the signals.

The received signal may be represented as the sum of the first and second components. $received signal = \left(S1\right) + I$

The second component *I* may be written as the product of the sensing signal transmitted by the different base station (*S*2) and the channel impulse response (*h*2) $I = \left(S2 h2\right)$

The first or second component may be determined based on the received signal and one or both of the first predetermined sensing signal *S*1 and the second predetermined sensing signal *S*2. In some examples, this may be performed via cross-correlation of the received signal with the first and/or second predefined signal. In other examples, this may be performed via SIC.

The other component of the first and second components may be determined by subtracting the determined component from the received signal.

The second component *I* may be calculated by subtracting the first component from the received signal: $I = received signal - \left(S1\right)$

The first component (*S*1) may be calculated by subtracting the second component from the received signal: $\left(S1\right) = received signal - I$

The channel impulse response (*h*2) may be calculated by dividing the second component by the second predetermined signal: $h 2 = I / S 2$

The sensing signal received from the different base station (*S*2) may be calculated by dividing the second component by the channel impulse response (*h*2): $\left(S2\right) = I / h 2$

The second component of the received sensing signal may be received via an object of interest. The method may further comprise estimating a physical characteristic of the object of interest, based on the second component of the received sensing signal with the channel impulse response removed.

In order to estimate a physical characteristic of the object of interest based on the second component, the first and second base station may be synchronised. In this way, characteristics of the received signal (such as timing, signal strength and phase) could provide additional information about the object of interest. In this way, analysis of the object of interest may be improved, compared to methods that only use the first component of the received signal.

The first component of the received sensing signal may be received via an object of interest (the transmitted sensing signal may be reflected by the object of interest). The method may further comprise estimating a physical characteristic of the object of interest (e.g., distance, speed, direction of travel, altitude), based on the first component of the received sensing signal.

The transmitted sensing signal may be the first predefined sensing signal (S1).

The first predefined sensing signal (S1) may be precoded to produce the transmitted sensing signal. The transmitted sensing signal may be transmitted via a multi-antenna system.

Isolating the first component of the received sensing signal and/or isolating the second component of the received sensing signal may comprise performing successive interference cancellation, SIC, on the received sensing signal.

The transmitted sensing signal and the sensing signal transmitted by the different base station may be transmitted via the same frequency, frequency band or sub-frequency band.

By using the same frequency for sensing at both base stations, the spectrum may be used more efficiently. Moreover, the radio equipment hardware used for receiving and analysing received sensing signals may be designed/tuned to operate effectively on the sensing frequency. By using the same frequency at all base stations, the same hardware may be used, which is specialised for the particular frequency, thus improving performance at each base station. This may also reduce the complexity of the components and simplify the manufacturing process.

The first and second predefined sensing signals may be predefined in a communications standard.

The method may further comprise communicating an indication of the first and second predefined sensing signals between the base station and the different base station (e.g., via an Xn interface).

The first predefined sensing signal and the second predefined sensing signal may be different sensing signals.

The method may further comprise communicating communication signals between the base station and a User Equipment, UE.

A base station configured to perform any of the methods described above is also provided.

A computer program comprising instructions that, when executed by a processor, cause the processor to perform any of the methods described above is also provided.

A method of a base station isolating a component of a received sensing signal in an Integrated Sensing and Communication, ISAC, system is also provided. The base station is a distributed massive multiple-input and multiple-output, DM-MIMO, base station comprising a plurality of antenna panels. The method comprises determining a first predefined sensing signal (S1) and a second predefined sensing signal (S2). The method further comprises transmitting, via a first antenna panel of the plurality of antenna panels, a first transmitted sensing signal. The first transmitted sensing signal comprises the first predefined sensing signal (S1), The method further comprises transmitting, via a second antenna panel of the plurality of antenna panels, a second transmitted sensing signal. The second transmitted sensing signal comprises the second predefined sensing signal (S2). The method further comprises receiving, via the first antenna panel, a received sensing signal. The received sensing signal comprises a first component. The first component is a reflection of the first transmitted sensing signal. The received sensing signal further comprises a second component. The second component is an interfering signal from the second antenna panel. The second component comprises the second transmitted sensing signal. The method further comprises isolating the first component of the received sensing signal, based on the received sensing signal and one or both of the first predefined sensing signal (S1) and the second predefined sensing signal (S2).

The second sensing signal, which is transmitted by the second sensing panel, may be received at the first antenna panel via a direct channel between the first and second antenna panels and/or via a reflection of the second sensing signal (e.g., off an object of interest).

Techniques described above in the context of the two-base-station scenario may be equally applicable to the two-antenna-panel scenario.

The second component may further comprise a channel impulse response associated with the second transmitted sensing signal (h2). The method may further comprise isolating the second component of the received sensing signal by removing the first component from the received sensing signal. The method may further comprise removing the channel impulse response from the second component.

Removing the channel impulse response from the second component may comprise calculating the channel impulse response associated with the second sensing signal, based on the second component of the received sensing signal and the second predefined sensing signal.

The second component of the received sensing signal may be received via an object of interest. The method may further comprise estimating a physical characteristic of the object of interest, based on the second component of the received sensing signal with the channel impulse response removed.

The first component of the received sensing signal may be received via an object of interest (i.e., the first sensing signal is reflected by the object of interest). The method may further comprise estimating a physical characteristic of the object of interest (e.g., distance, speed, direction of travel, altitude), based on the first component of the received sensing signal.

The method may further comprise receiving, via the second antenna panel, a second received sensing signal. The second received sensing signal may comprise a first component and a second component. The first component may be a reflection of the second transmitted sensing signal. The second component may be an interfering signal from the first antenna panel. The second component may comprise the first transmitted sensing signal. The method may further comprise isolating the first component of the second received sensing signal, based on the second received sensing signal and one or both of the first predefined sensing signal (S1) and the second predefined sensing signal (S2).

Techniques described above for isolating components of the (first) received sensing signal may be equally applied to isolate components of the second received sensing signal.

The method may further comprise precoding the first sensing signal and/or the second sensing signal. The first antenna panel and the second antenna panel may each be a multi-antenna system.

Isolating the first component of the received sensing signal and/or isolating the second component of the received sensing signal may comprise performing successive interference cancellation, SIC, on the received sensing signal.

The transmitted sensing signal and the sensing signal transmitted by the different base station may be transmitted via the same frequency, frequency band or sub-frequency band.

By using the same frequency for sensing at antenna panels, the spectrum may be used more efficiently. Moreover, the radio equipment hardware used for receiving and analysing received sensing signals may be designed/tuned to operate effectively on the sensing frequency. By using the same frequency at all antenna panels, the same hardware may be used, which is specialised for the particular frequency, thus improving performance at each antenna panel. This may also reduce the complexity of the components and simplify the manufacturing process.

The first and second antenna panels may be geographically distributed (rather than co-located at the same base station site).

The first and second predefined sensing signals may be predefined in a communications standard.

The first and second predefined sensing signals may be exchanged between the antenna panels or may be defined by the base station centrally (by the central controller of the base station).

The first predefined sensing signal and the second predefined sensing signal may be different sensing signals.

The method may further comprise communicating communication signals between the first antenna panel and a User Equipment, UE. The method may further comprise communicating communication signals between the second antenna panel and the UE.

A base station configured to perform any of the methods described above is also provided.

A computer program comprising instructions that, when executed by a processor, cause the processor to perform any of the methods described above is also provided.

### Brief description of the drawings

Fig. 1 shows an example telecommunications system.
Fig. 2 shows an example of interference caused by sensing signals between two adjacent ISAC base stations.
Fig. 3 shows a specific example scenario in which a received sensing signal is not subject to interference from a sensing signal from another base station.
Fig. 4 shows a specific example scenario in which a received sensing signal is subject to interference from a sensing signal from another base station.
Fig. 5 shows an example of interference caused by sensing signals between two adjacent ISAC antenna panels.
Fig. 6 shows a specific example scenario in which a received sensing signal is not subject to interference from a sensing signal from another antenna panel.
Fig. 7 shows a specific example scenario in which a received sensing signal is subject to interference from a sensing signal from another antenna panel.

### Detailed description

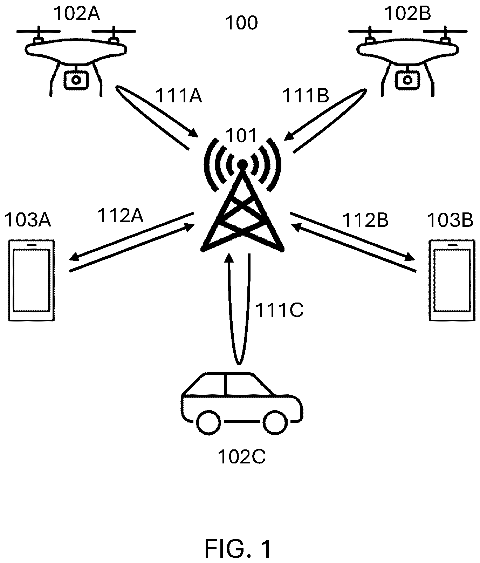

Fig. 1 shows an example telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and communications signals communicated along such channels may be received by any of the targets. For example, sensing signals communicated along channels 111A, 111B, and 111C may be received by UEs 103A or 103B. As such, if a sensing signal is sent along a sensing channel simultaneously with a communications signal along a communication channel, for example channel 112A, the receiving UE, for example UE 103A, may not be able to decode the communications signal due to interference from the sensing signal.

Time-domain multiplexing and/or frequency-domain multiplexing may be employed. For example, time axis may be divided into a sequence of time slots and/or the frequency axis may be divided into a sequence of frequency slots.

A transmitter may communicate signals in different directions via beamforming. Each beam may carry a different signal so that each beam is a separate radio resource allocation. Therefore, in some examples, each unique combination of timeslot, frequency and beam constitutes a different radio resource allocation, where all techniques are used (frequency multiplexing, time domain multiplexing, and beamforming). In other examples, one or two of these techniques may be used.

It is an aim for mobile network operators to support new ISAC features while ensuring efficient use of spectrum resources, so that the new sensing functionality may be added while fulfilling the requirements of existing customers. Therefore, adding ISAC sensing capabilities to base stations should not be disadvantageous for existing communication customers. To achieve this, efficient utilization of the available frequency spectrum is needed, so as not to waste limited frequency resources, and without creating interference to the communication signals detrimental to the quality of service of communications services. It is a further goal of mobile network operators that the new sensing functionality is accurate and that a targeted object can be precisely detected.

One way in which the above aims may be addressed is by allocating one or more predefined frequencies for use for the sensing functionality. In this way, the frequency resource utilisation of the new sensing functionality is limited and interference caused by sensing signals on the particular frequency band is predictable. Moreover, this may enable the hardware implementation to be tuned to the one or more predetermined frequencies to enable more accurate object detection. Components used for analysing the received sensing signals may be specifically designed to operate efficiently and accurately on the particular frequencies.

One drawback of using the same frequency band for sensing at every base station is that sensing signals at a given base station may be subject to interference from sensing signals from one or more neighbouring base stations. This may present challenges when deploying adjacent base stations using the same sensing frequencies, as the sensing signals may interfere with each other. A problem addressed by the proposed method is therefore how to use the same frequency for sensing between two adjacent BS, whilst handling interference so that each base station can perform accurate and precise sensing.

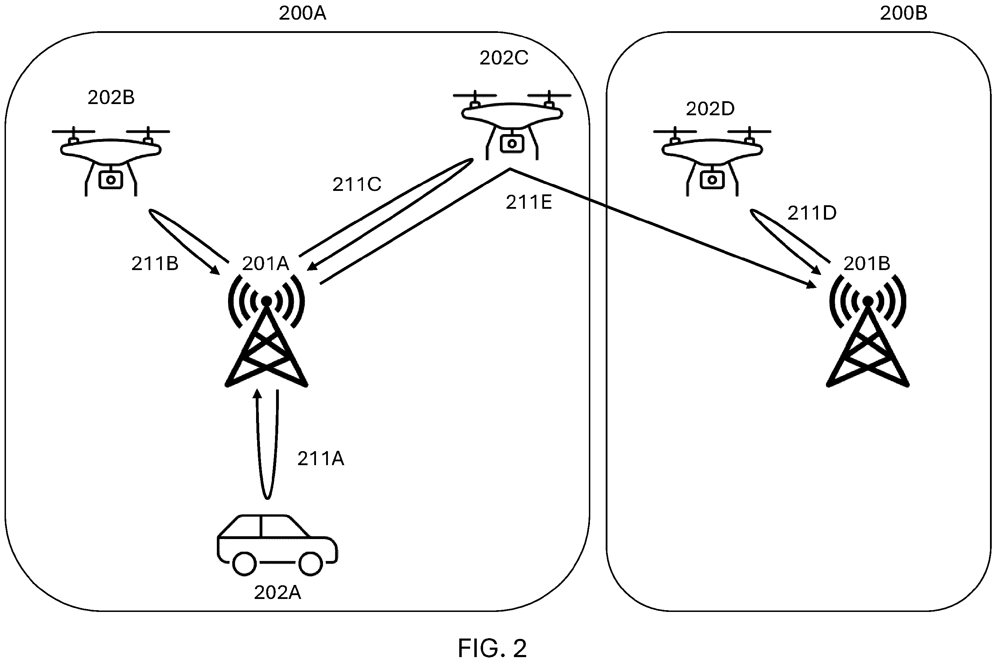

Fig. 2 illustrates an example of how interference may be caused by sensing signals between two adjacent ISAC base stations. A first ISAC base station 201A may monitor one or more sensing targets 202A, 202B, 202C via sensing channels 211A, 211B, 211C in a first coverage area 200A. A second ISAC base station 201B may monitor one or more sensing targets 202D via one or more sensing channels 211D in a second coverage area 200B.

Although channels are depicted as being between the respective base station 201A, 201B and a sensing target, sensing signals communicated along such channels may not be restricted to these channels and may also travel via other channels. For example, sensing signals communicated by the first base station 201A along channel 211C may reflect off the sensing target 202C and be received by the second base station 201B via channel 211E. As such, if the sensing signals from the first and second base stations are sent via the same frequency band, sensing signals received at the second base station may be subject to interference from sensing signals transmitted by the first base station.

The proposed methods provide techniques for suppressing interference in received sensing signals. The proposed methods differentiate between the desired sensing signal received from the same ISAC BS and the interference sensing signal received from another ISAC BS. By enabling the base station to differentiate between these signals, the proposed methods may enable both ISAC base stations to use the same sensing frequency.

Two specific example scenarios are considered below. In a first scenario, a received sensing signal is not subject to interference from a sensing signal from another base station. In a second scenario, a received sensing signal is subject to interference from a sensing signal from another base station.

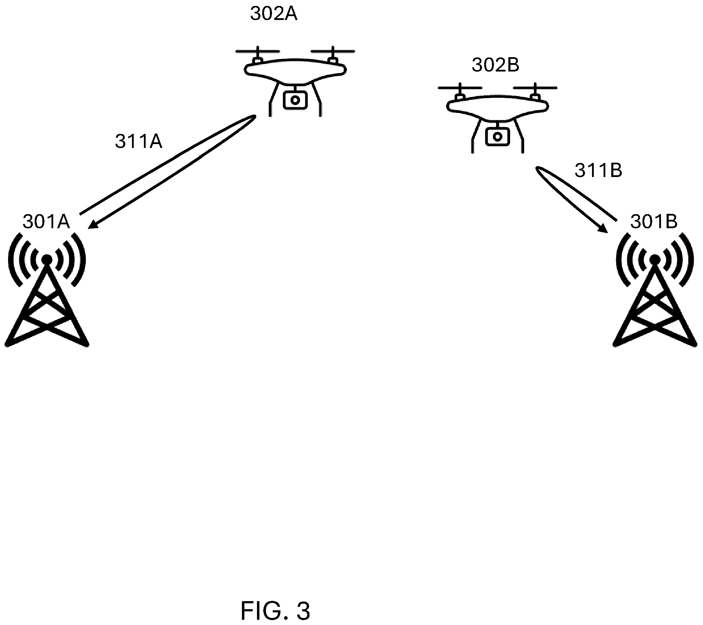

The first scenario is illustrated in Fig. 3. In the first scenario, each base station is monitoring a different sensing target, and no sensing signal interference occurs between the adjacent ISAC base stations, 301A and 301B.

As illustrated in Fig. 3, a first ISAC base station 301A transmits a first precoded sensing signal S1 via channel 311A. The first precoded sensing signal reflects off a first sensing target 302A and the reflected sensing signal is received by the first base station 301A. A second ISAC base station 301B transmits a second precoded sensing signal S2 via channel 311B. The second precoded sensing signal reflects off a second sensing target 302B and the reflected sensing signal is received by the second base station 301B.

Each base station analyses the received echo of the respective sensing signal.

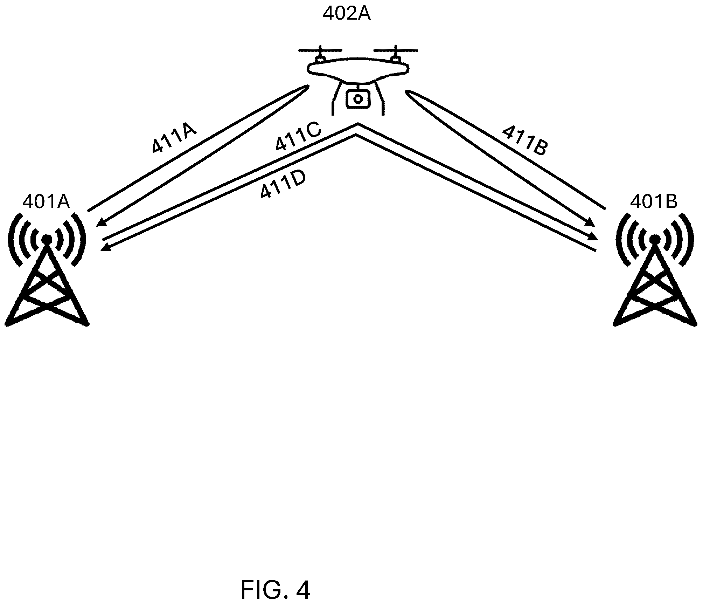

The second scenario is illustrated in Fig. 4. In the second scenario, each base station is monitoring the same sensing target and the sensing signals from each ISAC base station interfere with each other.

As illustrated in Fig. 4, a first ISAC base station 401A transmits a first precoded sensing signal S1 via channel 411A. The first precoded sensing signal reflects off a sensing target 402A and the reflected sensing signal is received by the first base station 401A. A second ISAC base station 401B transmits a second precoded sensing signal S2 via channel 411B. The second precoded sensing signal reflects off the sensing target 402A and the reflected sensing signal is received by the second base station 401B.

The first precoded sensing signal transmitted by the first base station 401A reflects off the sensing target 402A and the reflected sensing signal is also received by the second base station 401B via channel 411C. The second precoded sensing signal transmitted by the second base station 401B reflects off the sensing target 402A and the reflected sensing signal is also received by the first base station 401A via channel 411D.

An interfering signal received at a base station from a neighbouring base station may be modified by an impulse response function of the channel. The impulse response function may be represented by a complex multiplier h. The channel impulse response may change the amplitude and phase of the received signal. The impulse response function for channel 411C may be written as *h*1 and the impulse response function for channel 411D may be written as *h*2. Therefore, the interfering signal from the first base station received at the second base station may be written as (*S*1 *h*1) and the interfering signal from the second base station received at the first base station may be written as (*S*2 *h*2).

The impulse response function of channels 411A and 411B through with the sensing signal echo reaches the base station may not feature in the equation of the received signal. This is because the sensing signal passes through the channel once in each direction (from the base station to the sensing target and from the sensing target to the base station). The impulse response function in one direction may be the inverse of the channel response function in the other direction. Therefore, the overall impulse response function is *h* × *h*⁻¹ = 1.

The sensing signals received at each base station interfere and the signal received at each base station may be written as the sum of the two components. Therefore, the signal received at the first base station is (*S*1) + (*S*2 *h*2) = (*S*1) *+ I* (where *I* is the interference from the second base station). The signal received at the second base station is (*S*2) + (*S*1 *h*1) = (*S*2) + *I* (where *I* is the interference from the first base station). The interference "*I*" in each equation is not necessarily the same.

At the first base station, Successive Interference Cancellation (SIC) techniques may be used to calculate the interference *I*. If *S*2 is known at the first base station, the first base station may also calculate the channel impulse response *h*2.

The first base station may then remove the interference *I* from the received signal.

The first base station may then analyse the echo of its own sensing signal (*S*1) from the sensing target. The echo is what remains after the interference *I* is removed from the received signal.

If *S*2 is known at the first base station, the first base station may also perform additional analysis on the sensing signal received from the second base station. The first base station may remove *S*1 and *h*2 from the received signal to provide the sensing signal received from the second base station. This sensing signal may be analysed to provide further information about the sensing target.

At the second base station, Successive Interference Cancellation (SIC) techniques may be used to calculate the interference *I*. If *S*1 is known at the second base station, the second base station may also calculate the channel impulse response *h*1.

The second base station may then remove the interference *I* from the received signal.

The second base station may then analyse the echo of its own sensing signal (*S*2) from the sensing target. The echo is what remains after the interference *I* is removed from the received signal.

If *S*1 is known at the second base station, the second base station may also perform additional analysis on the sensing signal received from the first base station. The second base station may remove *S*2 and *h*1 from the received signal to provide the sensing signal received from the first base station. This sensing signal may be analysed to provide further information about the sensing target.

In an example method, the following steps may be performed to apply sensing signal interference suppression (as described above with reference to the second scenario illustrated in Fig. 4):

The ISAC base stations may know the sensing signals (S1 form BS1 and S2 from BS2). These signals may be predetermined and may not change or may only change infrequently.

The ISAC base stations transmit the sensing signals.

The ISAC base stations receive the sensing signals.

Successive interference cancellation (SIC) is applied at the receiver of each ISAC base station to remove the interference caused by the sensing signal from the other base station.

The sensing signal echo is analysed, based on the sensing value from the ISAC BS.

If the sensing signal from the other base station is known, the channel impulse response associated with the sensing interference signal may also be calculated. The sensing interference signal and the associated channel impulse response may be removed from the received signal.

Additional analysis may then be performed based on the sensing signal from the other ISAC BS. The additional analysis may provide more accurate results. Both base stations may be timely aligned/synchronised.

### Distributed Massive MIMO

Distributed massive MIMO (DM-MIMO) may be used to provide extended cell coverage. The antenna array may be divided into 2 panels or more and deployed in different locations. This approach is used in 5G and has been improved, especially in Release 18 and the ongoing work in Release 19. Distributed massive MIMO will likely also be adopted in 6G technology. Use of ISAC technology alongside DM-MIMO may also be introduced to 6G technology.

For similar reasons to those discussed above, it is preferred for each antenna panel in a DM-MIMO base station to communicate sensing signals on one or more pre-determined frequencies, so that the components and techniques may be optimised. This would help optimising the hardware implementation to enable more accurate object detection. However, this will make it more challenging to deploy ISAC BS with distributed MIMO using the same sensing frequencies. Sensing signals from two different antenna panels will interfere with each other.

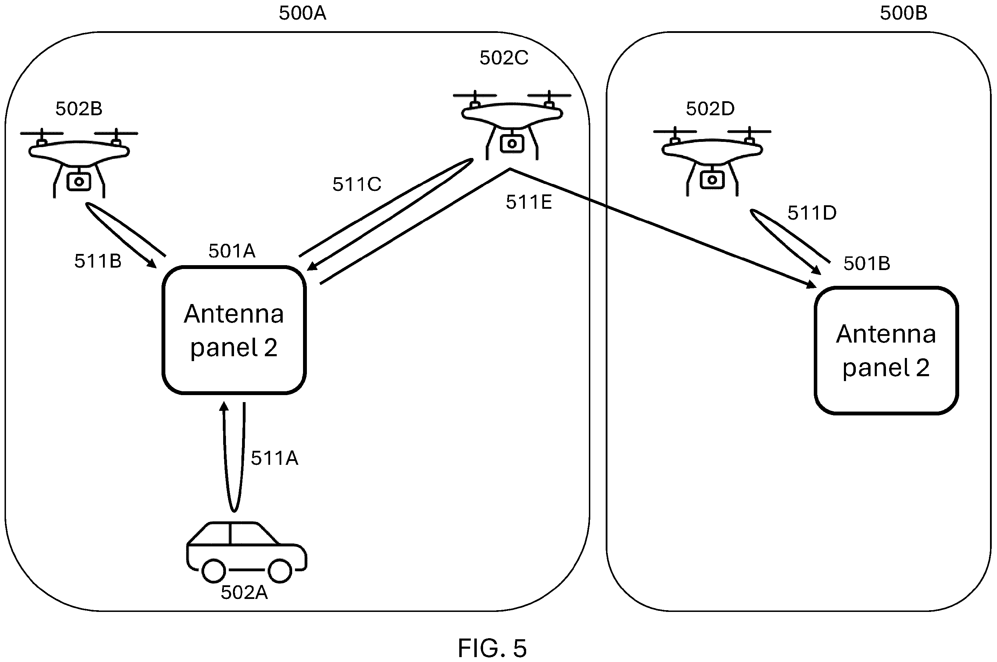

Fig. 5 illustrates an example of how interference may be caused by sensing signals between two antenna panels in a DM-MIMO base station. A first antenna panel 501A may monitor one or more sensing targets 502A, 502B, 502C via sensing channels 511A, 511B, 511C in a first coverage area 500A. A second antenna panel 501B may monitor one or more sensing targets 502D via one or more sensing channels 511D in a second coverage area 500B.

Although channels are depicted as being between the respective antenna panel 501A, 501B and a sensing target, sensing signals communicated along such channels may not be restricted to these channels and may also travel via other channels. For example, sensing signals communicated by the first antenna panel 501A along channel 511C may reflect off the sensing target 502C and be received by the second antenna panel 501B via channel 511E. As such, if the sensing signals from the first and second antenna panels are sent via the same frequency band, sensing signals received at the second antenna panel may be subject to interference from sensing signals transmitted by the first antenna panel.

The methods described above may be equally applied to suppress interference between antenna panels in a DM-MIMO base station. As a result, the two distributed antenna panels at the base station may use the same frequency for sensing.

The proposed methods provide techniques for suppressing interference in sensing signals received at the antenna panels. The proposed methods differentiate between the desired sensing signal received from the same antenna panel and the interference sensing signal received from another antenna panel. By enabling the base station to differentiate between these signals, the proposed methods may enable both antenna panels to use the same sensing frequency.

The two specific example scenarios described above in the context of adjacent base stations are also considered below in the context of antenna panels in a DM-MIMO base station. In the first scenario, a received sensing signal is not subject to interference from a sensing signal from another antenna panel. In the second scenario, a received sensing signal is subject to interference from a sensing signal from another antenna panel.

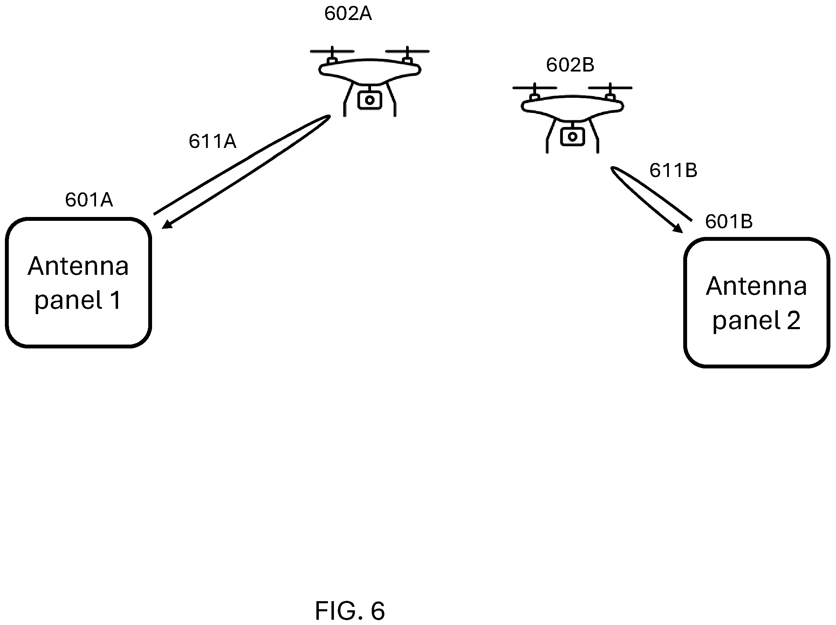

The first scenario is illustrated in the context of DM-MIMO in Fig. 6. In the first scenario, each antenna panel is monitoring a different sensing target, and no sensing signal interference occurs between the antenna panels, 601A and 601B.

As illustrated in Fig. 6, a first antenna panel 601A transmits a first precoded sensing signal S1 via channel 611A. The first precoded sensing signal reflects off a first sensing target 602A and the reflected sensing signal is received by the first antenna panel 601A. A second antenna panel 601B transmits a second precoded sensing signal S2 via channel 611B. The second precoded sensing signal reflects off a second sensing target 602B and the reflected sensing signal is received by the second antenna panel 301B.

A central controller of the base station analyses the received echo of the (each) sensing signal.

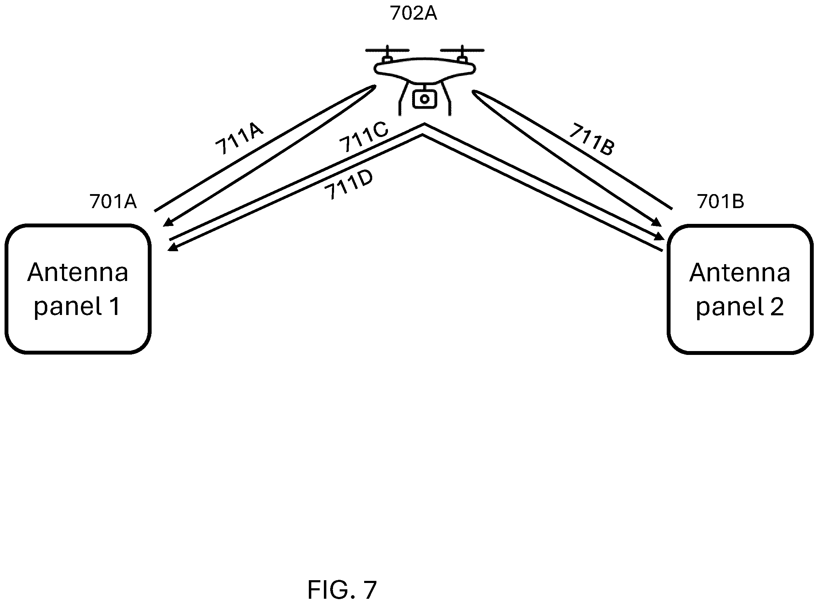

The second scenario is illustrated in Fig. 7. In the second scenario, each antenna panel is monitoring the same sensing target and the sensing signals from each antenna panel interfere with each other.

As illustrated in Fig. 7, a first antenna panel 701A transmits a first precoded sensing signal S1 via channel 711A. The first precoded sensing signal reflects off a sensing target 702A and the reflected sensing signal is received by the first antenna panel 701A. A second antenna panel 701B transmits a second precoded sensing signal S2 via channel 711B. The second precoded sensing signal reflects off the sensing target 702A and the reflected sensing signal is received by the second antenna panel 701B.

The first precoded sensing signal transmitted by the first antenna panel 701A reflects off the sensing target 702A and the reflected sensing signal is also received by the second antenna panel 701B via channel 711C. The second precoded sensing signal transmitted by the second antenna panel 701B reflects off the sensing target 702A and the reflected sensing signal is also received by the first antenna panel 701A via channel 411D.

Signals propagating through the channels may be modified by an impulse response function, in a similar manner as described above with reference to the adjacent-base-stations scenario.

The sensing signals received at each antenna panel interfere and the signal received at each antenna panel may be written as the sum of the two components. Therefore, the signal received at the first antenna panel is (*S*1) + (*S*2 *h*2) = (*S*1) *+ I* (where *I* is the interference from the second antenna panel). The signal received at the second antenna panel is (*S*2) + (*S*1 *h*1) = (*S*2) + *I* (where *I* is the interference from the first antenna panel). The interference "*I*" in each equation is not necessarily the same.

At the central controller of the DM-MIMO base station, Successive Interference Cancellation (SIC) techniques may be used to calculate the interference *I* associated with each received signal. The central controller may then remove the interference *I* from the signal received at each antenna panel.

The central controller knows *S*1 and *S*2 and may therefore also calculate the channel impulse responses *h*1 and *h*2.

The central controller may then analyse the echo of each antenna's own sensing signal (*S*1) and (*S*2) from the sensing target. The echo is what remains after the interference *I* is removed from the received signal.

The central controller may also perform additional analysis on each sensing signal received at each antenna panel from each other antenna panel. The central controller may remove *S*1 and *h*2 from the received signal at the first antenna panel, to provide the sensing signal received from the second antenna panel. The central controller may remove *S*2 and *h*1 from the received signal at the second antenna panel, to provide the sensing signal received from the first antenna panel. These sensing signals may be analysed to provide further information about the sensing target.

In an example method, the following steps may be performed to apply sensing signal interference suppression (as described above with reference to the second scenario illustrated in Fig. 7):

The central controller may know the sensing signals S1 and S2. These signals may be predetermined and may not change or may only change infrequently.

The antenna panels transmit the sensing signals.

The antenna panels receive the sensing signals.

Successive interference cancellation (SIC) is applied at the receiver of each antenna panel to remove the interference caused by the sensing signal from the other antenna panel.

Each sensing signal echo is analysed, based on the sensing signals from the antenna panels.

The channel impulse response associated with each sensing interference signal may also be calculated. The sensing interference signal and the associated channel impulse response may be removed from the received signal.

Additional analysis may then be performed based on the sensing signal from the other antenna panel. The additional analysis may provide more accurate results. Both antenna panels are managed by a central controller of the DM-MIMO base station and so may be timely aligned/synchronised.

In the Distributed Massive MIMO scenario, a UE may receive communication signals from both antenna panels. In contrast, in the scenario involving two base stations, a UE will typically only receive communications signals from one base station or the other (i.e., it will be registered with one of the two base stations).

Whilst the above examples describe interference from one neighbouring base station/antenna panel, the skilled person will appreciate that a received signal may comprise interference components from more than one adjacent base station/antenna panel. SIC techniques may be used to separate the components and perform analysis on each of the components individually.

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific network in some examples, (such as a 6G or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.
In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of a base station isolating a component of a received sensing signal in an Integrated Sensing and Communication, ISAC, system, wherein the base station is a distributed massive multiple-input and multiple-output, DM-MIMO, base station comprising a plurality of antenna panels, the method comprising:
determining a first predefined sensing signal (S1) and a second predefined sensing signal (S2);
transmitting, via a first antenna panel of the plurality of antenna panels, a first transmitted sensing signal, wherein the first transmitted sensing signal comprises the first predefined sensing signal (S1);
transmitting, via a second antenna panel of the plurality of antenna panels, a second transmitted sensing signal, wherein the second transmitted sensing signal comprises the second predefined sensing signal (S2);
receiving, via the first antenna panel, a received sensing signal, wherein the received sensing signal comprises:
a first component, wherein the first component is a reflection of the first transmitted sensing signal, and
a second component, wherein the second component is an interfering signal from the second antenna panel, wherein the second component comprises the second transmitted sensing signal; and
isolating the first component of the received sensing signal, based on the received sensing signal and one or both of the first predefined sensing signal (S1) and the second predefined sensing signal (S2).

2. The method of claim 1, wherein the second component further comprises a channel impulse response associated with the second transmitted sensing signal (h2), wherein the method further comprises:
isolating the second component of the received sensing signal by removing the first component from the received sensing signal; and
removing the channel impulse response from the second component.

3. The method of claim 2, wherein removing the channel impulse response from the second component comprises:
calculating the channel impulse response associated with the second sensing signal, based on the second component of the received sensing signal and the second predefined sensing signal.

4. The method of claim 2 or claim 3, wherein the second component of the received sensing signal is received via an object of interest, the method further comprising:
estimating a physical characteristic of the object of interest, based on the second component of the received sensing signal with the channel impulse response removed.

5. The method of any preceding claim, wherein the first component of the received sensing signal is received via an object of interest, the method further comprising:
estimating a physical characteristic of the object of interest, based on the first component of the received sensing signal.

6. The method of any preceding claim, further comprising:
receiving, via the second antenna panel, a second received sensing signal, wherein the second received sensing signal comprises:
a first component, wherein the first component is a reflection of the second transmitted sensing signal, and
a second component, wherein the second component is an interfering signal from the first antenna panel, wherein the second component comprises the first transmitted sensing signal; and
isolating the first component of the second received sensing signal, based on the second received sensing signal and one or both of the first predefined sensing signal (S1) and the second predefined sensing signal (S2).

7. The method of any preceding claim, further comprising:
precoding the first sensing signal and/or the second sensing signal, wherein the first antenna panel and the second antenna panel are each a multi-antenna system.

8. The method of any preceding claim, wherein isolating the first component of the received sensing signal and/or isolating the second component of the received sensing signal comprises performing successive interference cancellation, SIC, on the received sensing signal.

9. The method of any preceding claim, wherein the transmitted sensing signal and the sensing signal transmitted by the different base station are transmitted via the same frequency, frequency band or sub-frequency band.

10. The method of any preceding claim, wherein the first and second antenna panels are geographically distributed.

11. The method of any preceding claim, wherein the first and second predefined sensing signals are predefined in a communications standard.

12. The method of any preceding claim, wherein the first predefined sensing signal and the second predefined sensing signal are different sensing signals.

13. The method of any preceding claim, further comprising:
communicating communication signals between the first antenna panel and a User Equipment, UE; and
communicating communication signals between the second antenna panel and the UE.

14. A base station configured to perform the method of any preceding claim.

15. A computer program comprising instructions that, when executed by a processor, cause the processor to perform the method of any of claims 1 to 13.
